# EUROPÄISCHE PATENTSCHRIFT

(11) **EP 3 514 308 B1**
(45) Veröffentlichungstag und Bekanntmachung des Hinweises auf die Patenterteilung: **03.08.2022**
(21) Anmeldenummer: 19150973.6
(22) Anmeldetag: 09.01.2019
(51) Int. Cl.: E05F 11/38, E05F 11/48

(54) **MITNEHMER MIT SCHWENKBAREM KLEMMTEIL UND MONTAGEVERFAHREN**
DRIVER WITH PIVOTABLE CLAMPING PART AND METHOD OF ASSEMBLY
DISPOSITIF ENTRAÎNEUR POURVU DE PIÈCE DE SERRAGE PIVOTANTE ET PROCÉDÉ DE MONTAGE

(30) Priorität: 22.01.2018 DE 102018200925
(43) Veröffentlichungstag der Anmeldung: 24.07.2019
(73) Patentinhaber: Brose Fahrzeugteile SE & Co. Kommanditgesellschaft, Bamberg, 96052 Bamberg (DE)
(72) Erfinder: TAUBMANN, Udo, 96476 Bad Rodach-Sülzfeld (DE); WAGNER, Frank, 90431 Nürnberg (DE); SALM, Christian, 96052 Bamberg (DE); JÄGER, Christian, 97478 Knetzgau (DE)
(74) Vertreter: Maikowski & Ninnemann Patentanwälte Partnerschaft mbB

(56) Entgegenhaltungen:
- DE-A1- 10 005 759
- DE-A1-102008 060 407
- FR-A1- 2 830 894

## Beschreibung

Die Erfindung betrifft einen Mitnehmer für einen Fahrzeugfensterheber sowie ein Verfahren zur Montage einer Fensterscheibe an einen Mitnehmer für einen Fahrzeugfensterheber.

Aus dem Stand der Technik bekannte Mitnehmer für Fahrzeugfensterheber sind üblicherweise für die Verbindung mit einer zu verstellenden Fensterscheibe im Bereich einer Unterkante der Fensterscheibe oder im Bereich einer Seitenkante der Fensterscheibe vorgesehen. Ein solcher Mitnehmer ist dann beispielsweise über ein flexibles Zugmittel des Fahrzeugfensterhebers, zum Beispiel in Form eines Seilzuges, verbunden und verstellbar, um die Fensterscheibe anzuheben oder abzusenken. Derartige Mitnehmer können beispielsweise an einer Führungsschiene des Fahrzeugfensterhebers verschieblich geführt sein, zwingend ist dies jedoch nicht. Grundsätzlich überträgt ein solcher Mitnehmer eine, zum Beispiel über einen elektromotorischen Antrieb, erzeugte Verstellkraft an die hiermit verbundene Fensterscheibe, um die Fensterscheibe zu verstellen.

Für die Verbindung mit der Fensterscheibe ist es bekannt, an dem Mitnehmer zwei einander gegenüberliegende Klemmteile vorzusehen, zwischen denen ein Spalt für die Aufnahme eines Abschnitts der Fensterscheibe vorgesehen ist. Zwischen diesen Klemmteilen kann dann der in den Spalt eingeführte Abschnitt der Fensterscheibe an dem Mitnehmer fixiert werden. Beispielsweise ist hierfür mindestens ein Befestigungselement vorgesehen, um die beiden einander gegenüberliegenden Klemmteile miteinander zu verbinden und gegen den in den Spalt eingeführten Abschnitt der Fensterscheibe zu drücken, sodass der Abschnitt zwischen den Klemmteilen klemmend gehalten ist.

Bei der Montage der Fensterscheibe an einem solchen Mitnehmer kann das Problem bestehen, dass die beiden Klemmteile nach Einführung der Fensterscheibe ungünstig zueinander orientiert sind, sodass das nachfolgend anzubringende Befestigungselement für die Verbindung der beiden Klemmteile und die Fixierung der Fensterscheibe an dem Mitnehmer nicht ohne Weiteres fehlstellungsfrei montiert werden kann. So müssen die beiden Klemmteile für die Einführung der Fensterscheibe zunächst um ein gewisses Mindestmaß zueinander beabstandet sein, damit die Fensterscheibe respektive der hierfür vorgesehene Abschnitt, zum Beispiel an der Scheibenunterkante, ohne Weiteres in den Spalt zwischen den beiden Klemmteilen eingeführt werden kann. Beim Zusammenbau des Fensterhebers ist üblicherweise jedoch lediglich eines der Klemmteile noch zugänglich, zum Beispiel von einer Innenseite einer Fahrzeugtür her, in der der Fahrzeugfensterheber vorgesehen wird. Eine etwaige Fehlstellung eines außenseitig liegenden Klemmteils von der Innenseite aus kann hierbei dann kaum korrigiert werden und eine korrekte Verschraubung der beiden Klemmteile miteinander verhindern oder zumindest behindern. Ein an den Klemmteilen vorgesehenes Gewinde kann somit beschädigt werden und im Betrieb zu einem Ausfall des Fahrzeugfensterhebers führen.

Ein vergleichbarer Mitnehmer ist beispielsweise aus der DE 10 2005 025 281 A1 bekannt. Der hierin vorgeschlagene Mitnehmer weist ein über elastisch verformbare Stegverbindungen verstellbar gelagertes Klemmteil auf, um bei an den Mitnehmer fixierter Fensterscheibe eine Kippbewegung der Fensterscheibe relativ zu einer Führungsschiene zu ermöglichen. Das vorstehend geschilderte Montageproblem wird dabei jedoch in der DE 10 2005 025 281 A1 nicht adressiert. Hier ist lediglich die Bereitstellung einer ausgleichenden Kippbewegung über einen Scheibenhalter des Mitnehmers angedacht.

Weitere Mitnehmer für Fahrzeugfensterheber sind in der DE 10 2008 060 407 A1, der FR 2 830 894 A1 und der DE 100 05 759 A1 beschrieben.

Der vorgeschlagenen Lösung liegt damit die Aufgabe zugrunde, einen Mitnehmer sowie ein Montageverfahren bereitzustellen, bei dem die vorgenannten Schwierigkeiten bei der Anbringung einer Fensterscheibe an einen Mitnehmer mit zwei einander gegenüberliegenden Klemmteilen vermieden oder zumindest reduziert werden.

Diese Aufgabe wird sowohl mit einem Mitnehmer nach Anspruch 1 als auch mit einem Montageverfahren nach Anspruch 8 gelöst.

Demnach ist ein Mitnehmer für einen Fahrzeugfensterheber vorgeschlagen, der einem Scheibenhalter mit zwei einander gegenüberliegenden Klemmteilen umfasst. Zwischen den Klemmteilen ist ein Spalt für die Aufnahme eines Abschnitts einer Fensterscheibe vorgesehen, wobei die Klemmteile bei in den Spalt eingeführter Fensterscheibe über mindestens ein Befestigungselement, zum Beispiel in Form einer Schraube oder eines Bolzens, miteinander zu verbinden sind. Bei der vorgeschlagenen Lösung bildet der Scheibenhalter ferner einen Lagerabschnitt für eines der Klemmteile aus, an dem eine Schwenkachse für dieses eine Klemmteil definiert ist. Ferner ist ein in den Spalt ragendes Schwenkelement vorgesehen, mittels dem dieses eine Klemmteil durch Einführen der Fensterscheibe in den Spalt um die Schwenkachse in Richtung des anderen Klemmteils schwenkbar ist.

Über das Schwenkelement wird somit an dem Mitnehmer eine Art Hebelmechanismus bereitgestellt, um mit Einführen der Fensterscheibe eines der Klemmteile in Richtung des anderen, gegenüberliegenden Klemmteils zu verschwenken. Beim Fügen der Fensterscheibe ist somit das eine Klemmteil mittels des Schwenkelements um die an dem Lagerabschnitt definierte Schwenkachse von einer Vormontageposition in eine Montageposition schwenkbar. Während in der Vormontageposition die beiden Klemmteile um ein vorgegebenes Mindestmaß zueinander beabstandet und das eine Klemmteil zum Beispiel relativ zu dem anderen Klemmteil verkippt ist, um ein Einführen eines Abschnitts der Fensterscheibe in den Spalt zu erleichtern, sind die beiden Klemmteile in der Montageposition einander angenähert, um die Montage des die beiden Klemmteile miteinander verbindenden Befestigungselements zu erleichtern. In der Montageposition sind dann beispielsweise die Klemmteile im Wesentlichen parallel zueinander ausgerichtet.

Das in den Spalt ragende Schwenkelement ist folglich eingerichtet und vorgesehen, durch den in den Spalt bestimmungsgemäß eingeführten Abschnitt der Fensterscheibe verdrängt zu werden und hierdurch das eine Klemmteil um die durch den Lagerabschnitt vorgegebene Schwenkachse in Richtung des anderen Klemmteils (in die Montageposition) zu schwenken. Derart kann beispielsweise eine an dem einen Klemmteil vorgesehene Befestigungsöffnung für das zu montierende Befestigungselement allein durch Einführen der Fensterscheibe in den Spalt des Mitnehmers zu einer korrespondierenden Befestigungsöffnung an dem anderen Klemmteil bestimmungsgemäß ausgerichtet werden. An einer Befestigungsöffnung eines Klemmteils oder an beiden Befestigungsöffnungen beider Klemmteile kann in einer Ausführungsvariante beispielsweise ein Innengewinde für einen Schraubbolzen oder für eine Befestigungsschraube des Befestigungselements ausgebildet sein. In einer Ausführungsvariante kann in einer Befestigungsöffnung eines Klemmteils eine Gewindehülse drehfest gelagert sein. Diese Gewindehülse weist dann ein Innengewinde für einen Schraubbolzen oder für eine Befestigungsschraube des Befestigungselements auf.

Das Schwenkelement ist an dem Lagerabschnitt ausgeformt. Das Schwenkelement ist somit einstückig mit dem die Schwenkachse definierenden Lagerabschnitt ausgebildet, beispielsweise aus einem Kunststoffmaterial.

Hierbei ist das Schwenkelement ausgebildet, beim Einführen der Fensterscheibe in den zwischen den Klemmteilen gebildeten Spalt das eine Klemmteil unter elastischer und/oder plastischer Deformation des Lagerabschnitts in Richtung des anderen Klemmteils zu verschwenken. An dem Lagerabschnitt ist somit gezielt material- und konstruktionsbedingt eine Deformierbarkeit zugelassen, um eine Schwenkachse vorzugeben und das Schwenken des einen Klemmteils um diese vorgegebene Schwenkachse beim Einführen der Fensterscheibe in den Spalt zu gewährleisten. Der Lagerabschnitt ist somit in einem Bereich gezielt elastisch und/oder plastisch deformierbar ausgestaltet, um hierüber eine Schwenkachse vorzugeben, um die das eine Klemmteil mittels des durch Einführen der Scheibe verdrängte Schwenkelement bei der Montage geschwenkt wird.

In einer Ausführungsvariante befindet sich das Schwenkelement bezogen auf eine Einführrichtung, entlang der die Fensterscheibe bestimmungsgemäß in den Spalt einführbar ist, unterhalb der Schwenkachse. Das eine, zu verschwenkende Klemmteil kann hier folglich oberhalb der Schwenkachse des Lagerabschnitts vorgesehen sein sodass unter Hebelwirkung des beim Einführen der Fensterscheibe verdrängten Schwenkelements dieses Klemmteil in Richtung des gegenüberliegenden anderen Klemmteils verlagert wird.

In einer Ausführungsvariante bildet der Lagerabschnitt einen eine Aussparung definierenden Lagerbügel aus, wobei das Schwenkelement in der Aussparung des Lagerbügels angeordnet ist. Das Schwenkelement erstreckt sich somit beispielsweise bei einem U-förmigen Lagerbügel von einer Basis des Lagerbügels in eine zwischen zwei über die Basis miteinander verbundenen Schenkeln des Lagerbügels gebildete Aussparung und ragt gleichzeitig in den Spalt des Mitnehmers. Die Gestaltung mit einem Lagerbügel ermöglicht beispielsweise eine gezielte Deformierbarkeit im Bereich der die beiden Schenkel verbindenden Basis, sodass das an der Basis ausgeformte Schwenkelement unter Verdrängung des in den Spalt eingeführten Abschnitts der Fensterscheibe den Lagerbügel im Bereich der die Schwenkachse definierenden Basis verformt und hierdurch dann das eine mit der Basis ebenfalls einstückig ausgebildete Klemmteil in Richtung des anderen Klemmteils schwenkt.

Das Schwenkelement kann zum Beispiel zapfen- oder nockenförmig ausgebildet sein.

Der Mitnehmer kann grundsätzlich einen Mitnehmerkörper umfassen, an dem zumindest ein Teil des Scheibenhalters festgelegt, insbesondere hieran befestigt oder ausgeformt ist und der einen Führungsabschnitt für die verschiebliche Führung des Mitnehmers an einer Führungsschiene eines Fahrzeugfensterhebers aufweist. An dem Mitnehmerkörper können somit insbesondere die zwei einander gegenüberliegenden Klemmteile festgelegt sein. In einer Ausführungsvariante kann eines der Klemmteile an dem Mitnehmerkörper ausgeformt sein, während insbesondere ein das andere Klemmteil aufweisender Teil des Scheibenhalters an dem Mitnehmerkörper befestigt ist. In der zuletzt genannten Ausführungsvariante kann beispielsweise vorgesehen sein, dass ein separat - und gegebenenfalls aus einem anderen Material als der Mitnehmerkörper - hergestellter Teil mit dem zu verschwenkenden Klemmteil an den Mitnehmerkörper montiert ist, an dem wiederum das andere Klemmteil als integraler Bestandteil ausgeformt ist. Der an den Mitnehmerkörper montierte und hieran befestigte Teil kann hierbei auch den das Schwenkelement umfassenden Lagerelement umfassen. An dem Mitnehmerkörper ist in einer Ausführungsvariante für die Befestigung eines separat von dem Mitnehmerkörper ausgeformten und das zu verschwenkende Klemmteil aufweisenden Teils beispielsweise mindestens ein vorstehender Zapfen oder Steg ausgebildet, der im zusammengebauten Zustand des dann mindestens zweiteiligen Mitnehmers in eine korrespondierende Verbindungsöffnung des bestimmungsgemäß befestigten Teil eingreift.

An dem Mitnehmerkörper kann ein Verbindungsabschnitt für die Verbindung mit einem flexiblen Zugmittel des Fahrzeugfensterhebers, zum Beispiel in Form eines Seilzuges, vorgesehen sein. Ein solcher Verbindungsabschnitt weist dann zum Beispiel mindestens eine Nippelkammer für die Einhängung eines Seilnippels eines Seilzuges des Fahrzeugfensterhebers auf.

Von der vorgeschlagenen Lösung umfasst ist selbstverständlich auch ein Fahrzeugfensterheber für die Verstellung einer Fensterscheibe, der einen Mitnehmer mit einem eine Schwenkachse für das eine Klemmteil definierenden Lagerabschnitt und ein in den Spalt zwischen zwei Klemmteilen ragendes Schwenkelement aufweist.

Ferner betrifft ein weiterer Aspekt der vorgeschlagenen Lösung ein Verfahren zur Montage einer Fensterscheibe an einen Mitnehmer für einen Fahrzeugfensterheber. Hierbei wird zur bestimmungsgemäßen Montage der Fensterscheibe an den Mitnehmer ein Abschnitt der Fensterscheibe, zum Beispiel im Bereich einer Scheibenunterkante, in einen Spalt eingeführt, der zwischen zwei Klemmteilen des Mitnehmers gebildet ist. Anschließend werden die zwei Klemmteile über mindestens ein Befestigungselement miteinander verbunden, um den zwischen den Klemmteilen aufgenommenen Abschnitt der Fensterscheibe an dem Mitnehmer zu fixieren. An einem Lagerabschnitt des Mitnehmers ist für eines der Klemmteile eine Schwenkachse definiert und ein in den Spalt ragendes Schwenkelement vorgesehen, das an dem Lagerabschnitt ausgeformt ist, und durch Einführen der Fensterscheibe in den Spalt wird das eine Klemmteil, unter elastischer und/oder plastischer Deformation des Lagerabschnitts, in Richtung des anderen Klemmteils um diese Schwenkachse geschwenkt.

Für die Durchführung des vorgeschlagenen Montageverfahrens kann selbstverständlich ein Mitnehmer gemäß einer der vorstehend oder nachstehend erläuterten Ausführungsvarianten verwendet sein. Vorstehend und nachstehend für Ausführungsvarianten eines solchen Mitnehmers erläuterte Merkmale und Vorteile gelten somit auch für Ausführungsvarianten eines vorgeschlagenen Montageverfahrens und umgekehrt.

Insbesondere kann in einer Variante des Montageverfahrens vorgesehen sein, dass der in den Spalt eingeführte Abschnitt der Fensterscheibe auf das in den Spalt ragende Schwenkelement des Lagerabschnitts einwirkt und hierdurch das eine Klemmteil in Richtung des anderen Klemmteils geschwenkt wird. Hierbei kann allein durch das bestimmungsgemäße Einführen der Fensterscheibe in den Spalt eine Verlagerung des einen Klemmteils um die vorgegebene Schwenkachse erreicht werden.

Beispielsweise ist vorgesehen, dass nach Einführen der Fensterscheibe das Befestigungselement angebracht wird. Dieses kann zum Beispiel von dem (zweiten) unverschwenkten Klemmteil aus durch eine erste Befestigungsöffnung dieses (zweiten) Klemmteils hindurch eine Öffnung in der Fensterscheibe durchgreifen und in eine zweite Befestigungsöffnung des (ersten) verschwenkten Klemmteils eingreifen oder auch diese zweite Befestigungsöffnung durchgreifen, um die beiden (ersten und zweiten) Klemmteile miteinander zu verbinden und die Fensterscheibe an dem Mitnehmer zu fixieren. Beispielsweise ist bei der Montage eines Fahrzeugfensterhebers in einer Fahrzeugtür das eine zu verschwenkende Klemmteil einer Außenseite der Fahrzeugtür zugewandt und das andere, unverschwenkte Klemmteil von einer Innenseite der Fahrzeugtür her noch zugänglich, wenn die Fensterscheibe an den mit dem Mitnehmer bereits an der Fahrzeugtür vormontierten Fahrzeugfensterheber montiert wird. Das Einführen der Fensterscheibe in den Spalt zwischen den zwei Klemmteilen führt hier somit zu einer Verlagerung des außen liegenden, schwer(er) zugänglichen Klemmteils und richtet dieses Klemmteil bezüglich des anderen, inneren Klemmteils für die nachfolgende Anbringung des mindestens einen Befestigungselements aus.

Die beigefügten Figuren veranschaulichen exemplarisch mögliche Ausführungsvarianten der vorgeschlagenen Lösung.

Hierbei zeigen:
- Figur 1: eine perspektivische Ansicht einer Ausführungsvariante eines vorgeschlagenen Mitnehmers;
- Figur 2: ebenfalls in perspektivischer Ansicht den Mitnehmer in teilweiser Explosionsdarstellung;
- Figur 3: ausschnittsweise eine Schnittansicht des Mitnehmers mit zwei zueinander beabstandeten Klemmteilen und einem für die Verbindung der beiden Klemmteile miteinander vorgesehenen Befestigungselement;
- Figur 4: ausschnittsweise und in Seitenansicht der Mitnehmer mit hieran festgelegter Fensterscheibe;
- Figur 4A: eine Schnittansicht entlang der Schnittlinie A-A der Figur 4;
- Figuren 5-8: unterschiedliche Ansichten des Mitnehmers mit der hieran festgelegten Fensterscheibe;
- Figuren 9A-9C: verschiedene Ansichten einer weiteren Ausführungsvariante eines vorgeschlagenen Mitnehmers mit abweichend konstruiertem Lagerabschnitt für ein durch die Montage der Fensterscheibe an den Mitnehmer ausgelöstes Schwenken eines der Klemmteile in Richtung des anderen Klemmteils des Mitnehmers;
- Figuren 10A-10B: eine weitere Ausführungsvariante eines vorgeschlagenen Mitnehmers, bei dem ein Scheibenhalter mit seinen zwei Klemmteilen an einem Mitnehmerkörper ausgeformt ist;
- Figuren 11A-11B: eine weitere Ausführungsvariante eines vorgeschlagenen Mitnehmers, der mehrteilig ausgeführt ist und bei dem ein zu verschwenkendes Klemmteil als Bestandteil eines separaten Teils an einen Mitnehmerkörper montiert ist, an dem das andere Klemmteil des Scheibenhalters ausgeformt ist.

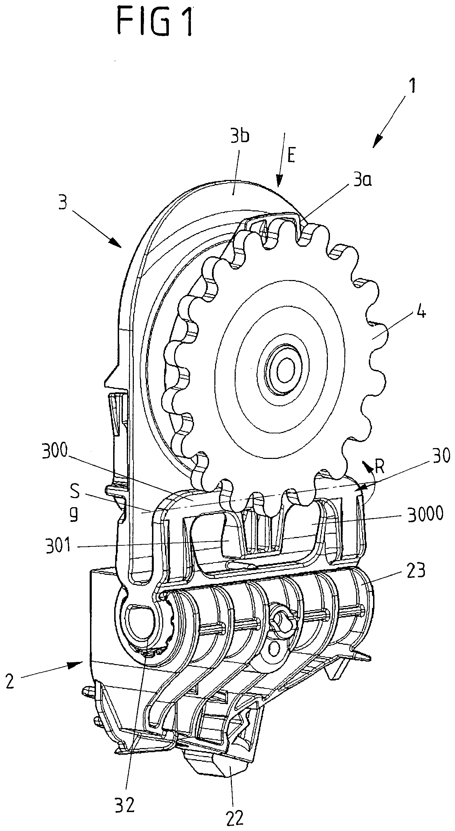

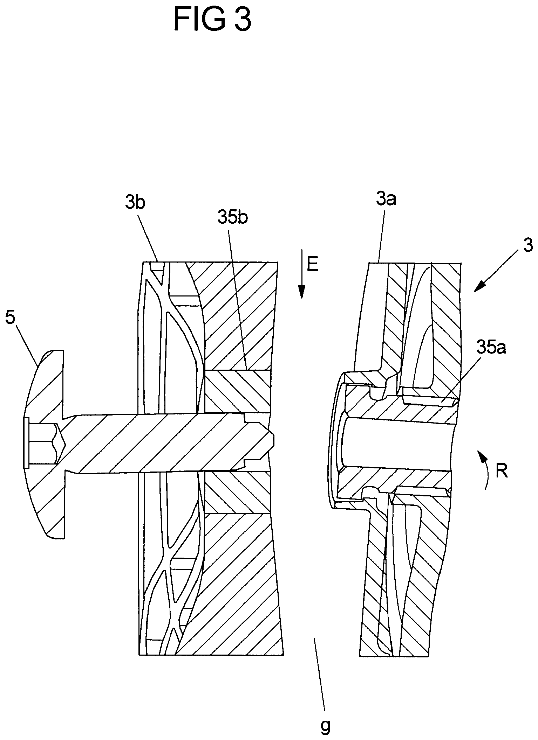

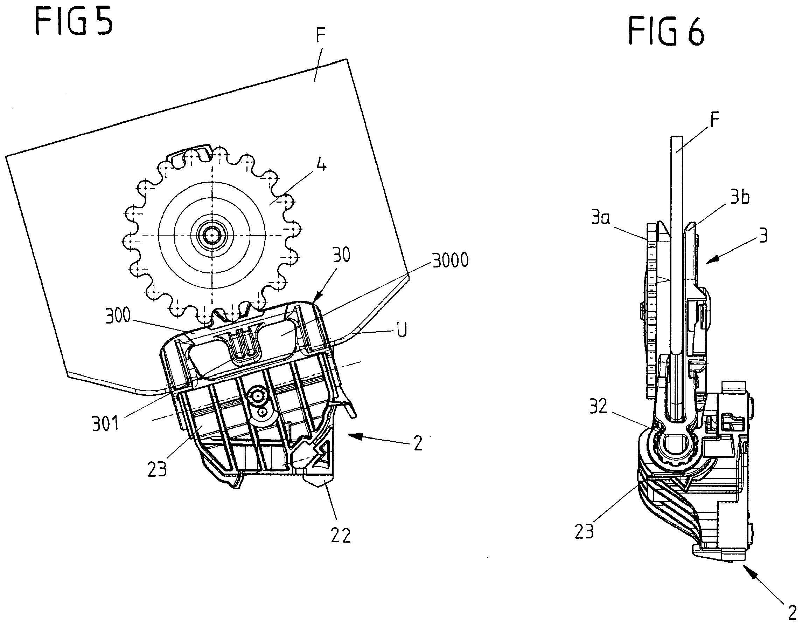

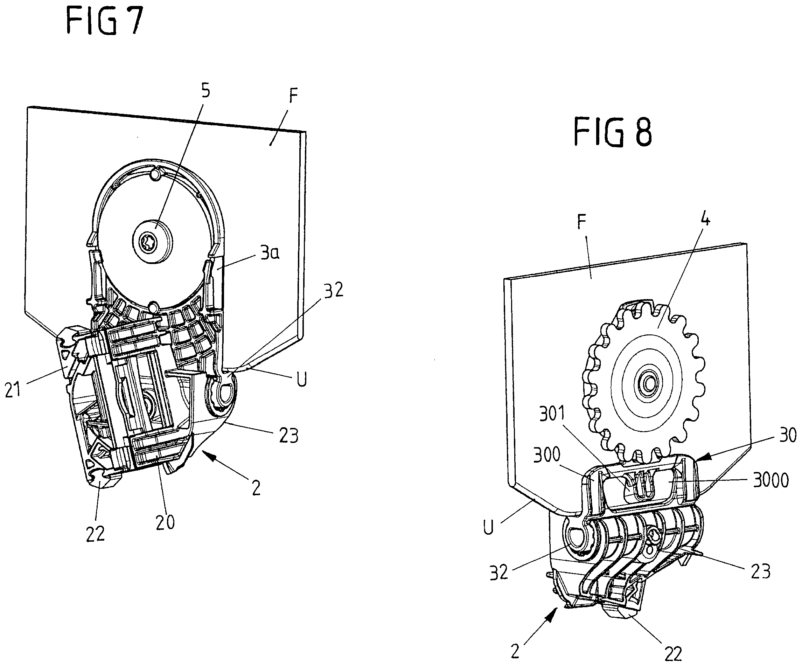

Die Figuren 1 bis 8 und 9A bis 11B zeigen in unterschiedlichen Ansichten Ausführungsvarianten für einen Mitnehmer 1, der beispielsweise in einem Fahrzeugfensterheber für eine rahmenlose Fahrzeugtür Verwendung finden kann.

Der Mitnehmer 1 weist einen Mitnehmerkörper 2 auf, an dem ein Führungsabschnitt 20 für die verschiebliche Führung des Mitnehmers 1 an einer (in den Figuren nicht dargestellten) Führungsschiene des Fahrzeugfensterhebers vorgesehen ist. Ferner ist an dem Mitnehmerkörper 2 ein Verbindungsabschnitt 21 für die Verbindung mit einem Seilzug des Fahrzeugfensterhebers vorgesehen. Diese Verbindungsabschnitt 21 weist hierfür zwei Nippelkammern auf, an denen Seilnippel des Seilzuges eingehängt werden können, um über den Seilzug eine Verstellkraft an den Mitnehmer 1 zu übertragen und diesen entlang der Führungsschiene verstellen zu können.

Zur Vorgabe einer Endposition des Mitnehmers 1, in der eine mit dem Mitnehmer 1 verbundene Fensterscheibe F vollständig abgesenkt ist, weist der Mitnehmerkörper 2 einen Anschlag 22 auf, über den der Mitnehmer 1 an einem Gegenanschlag, zum Beispiel an der Führungsschiene oder einem die Führungsschiene ausbildenden oder die Führungsschiene tragenden Trägerbauteil anschlagen kann.

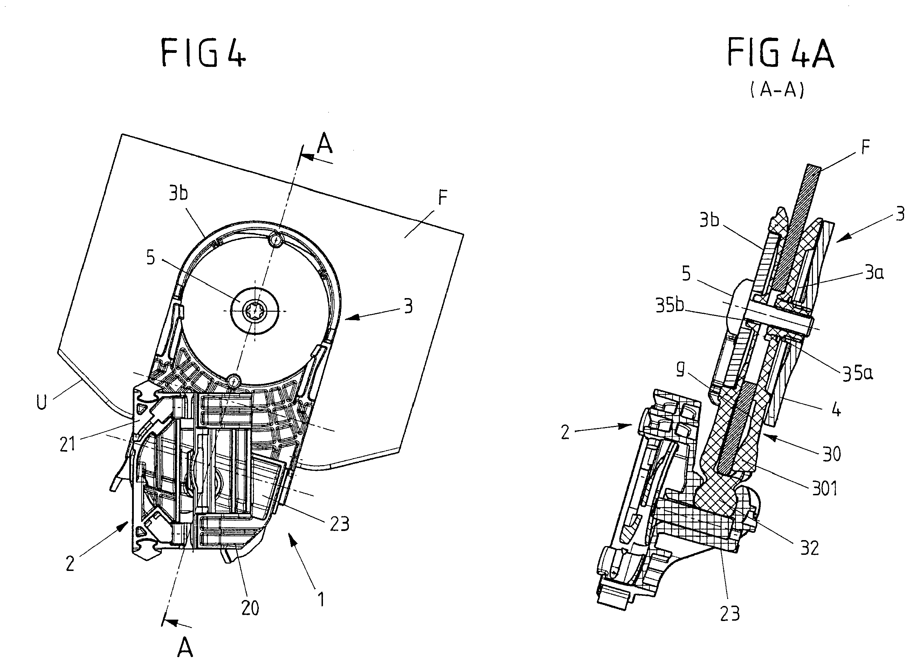

Der Mitnehmerkörper 2 des Mitnehmers 1 weist ferner einen Halterabschnitt 23 für die Festlegung eines Scheibenhalters 3 an dem Mitnehmerkörper 2 auf. Für die Fixierung des Scheibenhalters 3 an dem Mitnehmerkörper 2 bildet der Scheibenhalter 3 einen Verbindungsabschnitt 32 aus, der insbesondere Klemmteile 3a und 3b trägt und von dem Halterabschnitt 23 des Mitnehmerkörpers 2 umgriffen ist. Der Scheibenhalter 3 des Mitnehmers 1 ist mit den Klemmteilen 3a und 3b für eine formschlüssige und klemmende Verbindung des Mitnehmers 1 mit der zu verstellenden Fensterscheibe F vorgesehen, die in den Figuren 4 bis 8 ausschnittsweise dargestellt ist.

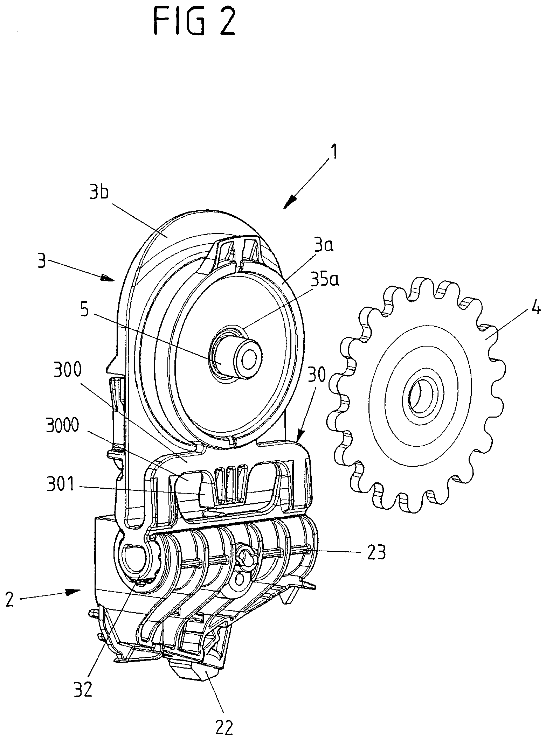

Der Scheibenhalter 3 bildet die zwei einander gegenüberliegenden Klemmteile 3a und 3b aus, die zwischen sich einen Spalt g definieren. In diesen Spalt g kann ein Abschnitt der Fensterscheibe F im Bereich ihrer Scheibenunterkante U bestimmungsgemäß eingeführt und damit zwischen den beiden Klemmteilen 3a und 3b angeordnet werden. Für die Fixierung der Fensterscheibe F an dem Mitnehmer 1 wird dann ein Befestigungselement, hier in Form einer Schraube 5, von einer Seite aus durch eine Befestigungsöffnung 35b an einem der Klemmteile 3a, 3b durch eine korrespondierende Öffnung in der Fensterscheibe F geführt und in eine Befestigungsöffnung 35a an dem gegenüberliegenden Klemmteil 3a ein geführt. An einem oder beiden Klemmteilen 3a, 3b kann dabei an einer Befestigungsöffnung 35a oder 35b ein Innengewinde vorgesehen sein, in das ein Außengewinde der Schraube 5 eingedreht wird. Das Innengewinde kann in einer Weiterbildung auch durch eine in einer Befestigungsöffnung 35a angeordnete Gewindehülse bereitgestellt sein. Zur Fixierung einer solchen Gewindehülse an dem schwenkbaren Klemmteil 3a ist ferner an dem einen Klemmteil 3a ein Schraubelement, z.B. in Form eines Schraubrades 4, anzubringen (vergleiche insbesondere Figuren 1 und 2). Dieses Schraubrad 4 wird - vor dem Einsetzen der Fensterscheibe F und der Anbringung der Schraube 5 - auf ein von dem einen Klemmteil 3a vorstehendes und Ende der Gewindehülse aufgedreht, um die Gewindehülse über einen in der Befestigungsöffnung 35a formschlüssig gehaltenen Kopf, z.B. mit einem Außensechskant, drehfest an dem Klemmteil 3a zu lagern.

Für die Montage der Fensterscheibe F an den Mitnehmer 1 sollten die beiden Klemmteile 3a und 3b ausreichend weit voneinander beabstandet sein und der sich zwischen ihnen ergebende Spalt g nach Möglichkeit trichterförmig sein. Damit besteht aber das Problem, das nach einem Einführen der Fensterscheibe F in den Spalt g entlang einer Einführrichtung E die beiden Klemmteile 3a und 3b des Scheibenhalters 3 unter Umständen mit ihren Befestigungsöffnungen 35a und 35b nicht miteinander fluchtend ausgerichtet sind. Dies wiegt umso schwerer, als dass bei der Montage der Fensterscheibe F an den Mitnehmer 1 der Mitnehmer 1 bereits üblicherweise an dem Fahrzeugfensterheber in einer Fahrzeugtür vormontiert ist und damit das eine, außen liegende Klemmteil 3b nicht mehr ohne Weiteres zugänglich ist, wenn von der Innenseite her die Schraube 5 an dem innenseitigen Klemmteil 3b fest gezogen werden soll. Eine etwaige Fehlstellung der beiden Klemmteile 3a und 3b zueinander respektive zu einer Einschraubrichtung der Schraube 5 verhindert oder zumindest behindert dann aber eine korrekte Verschraubung. Dies kann wiederum zu einer Beschädigung eines Innengewindes führen, in das die Schraube 5 eingedreht wird. Ein erhöhtes Risiko für einen Ausfall des Mitnehmers im Betrieb des Fahrzeugfensterhebers ist damit die Folge.

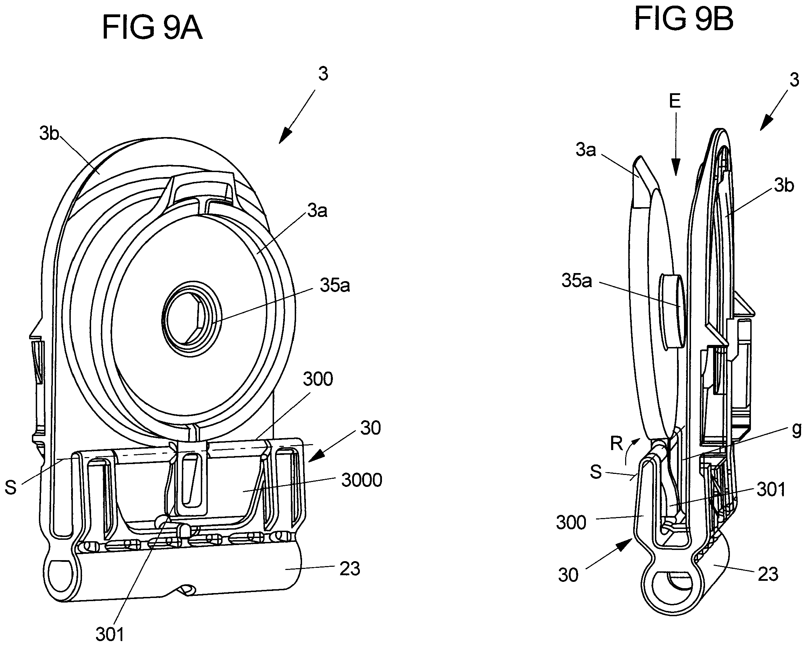

Bei den dargestellten Mitnehmern 1 der Figuren 1 bis 8 (und der Figuren 9A bis 11B) ist ein solches Risiko für eine fehlerhafte Verschraubung nahezu vollständig ausgeschlossen, indem an einem Lagerabschnitt 30 des Scheibenhalters 3 für das eine außen liegende (äußere) Klemmteil 3a eine Schwenkachse S definiert ist und ein in den Spalt g ragendes Schwenkelement 301 vorgesehen ist, mittels dem das äußere Klemmteil 3a durch Einführen der Fensterscheibe F in den Spalt g in Richtung des anderen, innen liegenden (inneren) Klemmteils um die Schwenkachse S schwenkbar ist.

Der mit einem U-förmigen Lagerbügel 300 ausgebildete Lagerabschnitt 30 ist hierbei einstückig mit dem zu verschwenkenden Klemmteil 3a und dem Schwenkelement 301 ausgeformt. Eine sich zwischen zwei Schenkel des Lagerbügels 300 erstreckende Basis des Lagerbügels 30 definiert dabei die Schwenkachse S, um die das eine, äußere Klemmteil 3a in Richtung des anderen, inneren Klemmteils 3b verschwenkt wird, wenn die Fensterscheibe F entlang der Einführrichtung E an den Mitnehmer 1 montiert wird. Das äußere Klemmteil 3a ist hierbei bezüglich der nach unten weisenden Einführrichtung E oberhalb der Schwenkachse S angeordnet, das in den Spalt g ragende Schwenkelement 301 unterhalb der Schwenkachse S. Das Schwenkelement 301 ist in der in den Figuren 1 bis 8 dargestellten Ausführungsvariante zapfenförmig mit einem bauchigen Endabschnitt und mithin als Schwenkzapfen 301 ausgestaltet. Dieser Schwenkzapfen 301 ist ferner innerhalb einer Aussparung 3000 des Lagerflügels 300 angeordnet, um eine Verlagerbarkeit des Schwenkzapfens 301 quer zur Einführrichtung E der Fensterscheibe F zu gewährleisten.

Der Lagerabschnitt 30 ist mit dem Lagerbügel 300 im Bereich der die Schwenkachse S definierenden Basis des Lagerbügels 300 gezielt verformbar ausgebildet. Derart kann die in den Spalt g eingeführte Fensterscheibe F unter Verdrängung des in den Spalt g ragenden Schwenkzapfens 301 die Basis des Lagerbügels 300 verformen. Die Verdrängung des Schwenkzapfens 301 führt zu einer Schwenkbewegung des Schwenkzapfens 301 und damit auch des hiermit einstückig ausgebildeten, äußeren Klemmteils 3a entlang einer Schwenkrichtung R um die Schwenkachse S in Richtung des das gegenüberliegenden, inneren Klemmteils 3b. Das äußere Klemmteil 3a wird somit allein durch das Einführen der Fensterscheibe S in den Spalt g um die Schwenkachse S und entlang der Schwenkrichtung R aus einer Vormontageposition in Richtung auf das gegenüberliegende Klemmteil 3b in eine Montageposition verlagert.

In der Montageposition ist das äußere Klemmteil 3a zu dem inneren Klemmteil 3b bestimmungsgemäß ausgerichtet, sodass eine Verschraubung über die Schraube 5 und das Schraubrad 4 unter Vermeidung einer Fehlstellung der beiden Klemmteile 3a und 3b zueinander erfolgen kann.

Über den Lagerabschnitt 30 des Scheibenhalters 3 wird somit an dem Mitnehmer 1 eine Art Hebelmechanismus bereitgestellt, um das äußere Klemmteil 3a beim Fügen der Fensterscheibe F in Richtung des anderen, inneren Klemmteils 3b zu verschwenken. Indem hierfür gezielt eine Verformung an dem Lagerabschnitt 30 im Bereich der vorgegebenen Schwenkachse S zugelassen ist, ist hierfür das äußere Klemmteil 3b nicht aufwendig zu lagern. Die Schwenkbarkeit des äußeren Klemmteils 3a unter Verdrängung des Schwenkzapfens 301 beim Einführen der Fensterscheibe F wird allein durch die Formgebung und das Material des Scheibenhalters 3 erreicht.

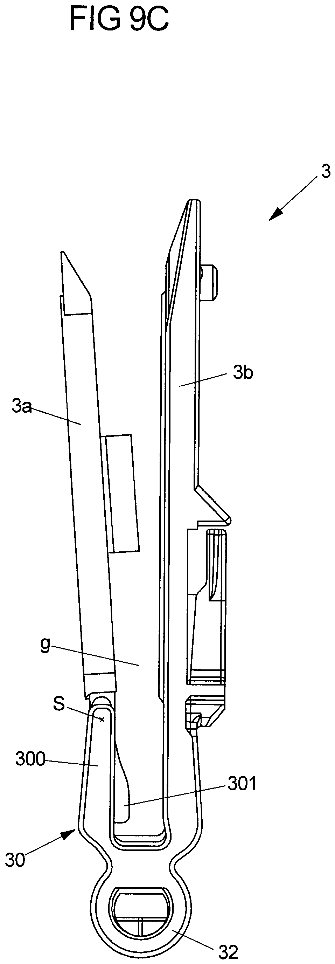

Die Figuren 9A, 9B und 9C zeigen in unterschiedlichen Ansichten eine weitere Ausführungsvariante für einen Scheibenhalter 3 und damit für einen Mitnehmer 1, der mit diesem Scheibenhalter 3 und einem in den Figuren 9A bis 9C nicht dargestellten Mitnehmerkörper 2 gebildet ist.

Auch bei der Ausführungsvariante der Figuren 9A bis 9C ist ein Lagerabschnitt 30 mit einem Lagerbügel 300 und einem Schwenkzapfen 301 vorgesehen, um eine Schwenkbarkeit des äußeren Klemmteils 3a zu gewährleisten. Die Basis des Lagerbügels 300 des Lagerabschnitts 30 ist hierbei im Unterschied zu der Ausführungsvariante der Figuren 1 bis 8 mit geringerer Steifigkeit ausgebildet, um eine elastische Deformation dieser Basis und damit des Lagerabschnitts 300 zu gestatten, wenn durch die in den Spalt g mit ihrer Scheibenunterkante U eingeführte Fensterscheibe F der Schwenkzapfen 301 unterhalb der Schwenkachse S verdrängt und hierdurch das äußere Klemmteil 3a entlang der Schwenkrichtung R in Richtung des gegenüberliegenden inneren Klemmteils 3 b verlagert wird.

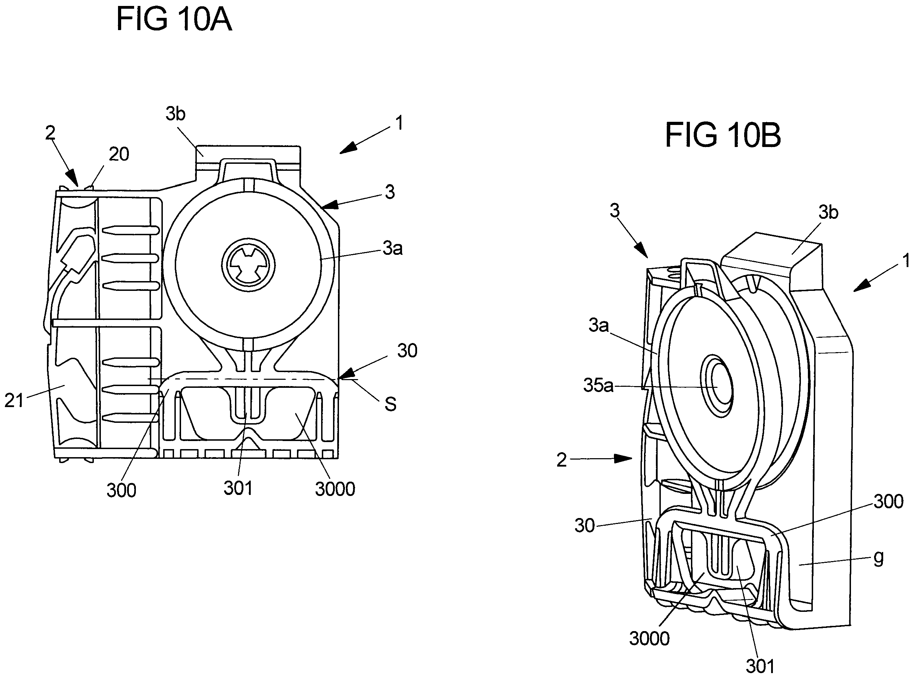

Die Figuren 10A und 10B zeigen in zwei unterschiedlichen Ansichten eine weitere Ausführungsvariante eines vorgeschlagenen Mitnehmers 1, bei dem der Scheibenhalter 3 an dem Mitnehmerkörper 2 ausgeformt ist. Der Führungsabschnitt 20 und der Verbindungsabschnitt 21 des Mitnehmerkörpers 2 liegen hierbei seitlich neben dem einen (feststehenden) Klemmteil 3b des Scheibenhalters 3 und sind einstückig mit diesem ausgebildet. An dem Mitnehmerkörper 2 ist ferner der Lagerbügel 300 des Lagerabschnitts 30 mit dem Schwenkzapfen 301 zur schwenkbaren Lagerung des anderen Klemmteils 3a und das andere Klemmteil 3a ausgeformt. Bei der Ausführungsvariante der Figuren 10A und 10B sind folglich der Mitnehmerkörper 2 und der Scheibenhalter 3 einteilig ausgeführt und mithin aus demselben Werkstoff hergestellt.

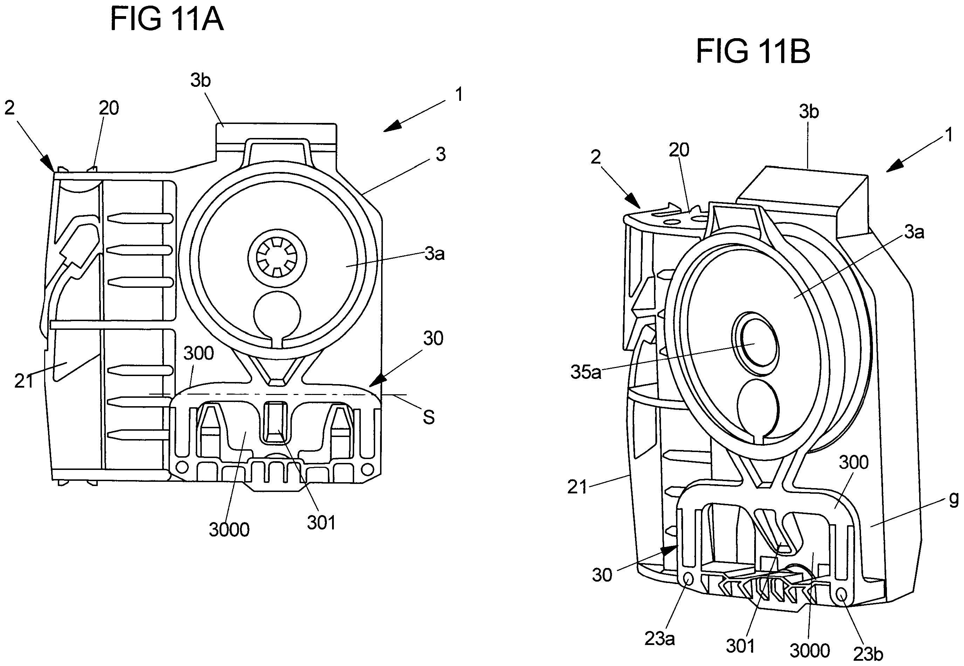

Bei der in den Figuren 11A und 11B dargestellten weiteren Ausführungsvariante ist der Mitnehmer 1 demgegenüber mehrteilig ausgeführt. So besteht der Mitnehmer 1 hier aus zwei Teilen, einerseits dem Mitnehmerkörper 2 mit hieran integral ausgebildetem (feststehendem) Klemmteil 3b und andererseits einem weiteren, an den Mitnehmerkörper 2 montierten Teil, das den Lagerabschnitt 30 mit dem Lagerbügel 300 und das schwenkbarer hieran ausgebildete Klemmteil 3a mit dem Schwenkzapfen 301 aufweist. Das zweite, den Lagerabschnitt 30 und das schwenkbare Klemmteil 3a aufweisende Teil des hier zweiteiligen Mitnehmers 1 bildet dementsprechend eine von zwei Klemmseiten des Scheibenhalters 3. Dieses Teil mit dem zu verschwenkenden Klemmteil 3a wird separat hergestellt, gegebenenfalls aus einem anderen Material als der Mitnehmerkörper 2 mit der hieran integral ausgebildeten anderen Klemmseite des Scheibenhalters 3 mit dem Klemmteil 3b.

Der Spalt g für die mit dem Mitnehmer 1 zu verbindende Fensterscheibe F entsteht bei dieser Ausführungsvariante erst durch Zusammenbau der Teile des Mitnehmers 1 und mithin durch Fügen der beiden Teile, die jeweils eines der Klemmteile 3a, 3b umfassen. Zur Verbindung des das zu verschwenkende Klemmteil 3a aufweisenden Teils mit dem Mitnehmerkörper 2 bildet der Mitnehmerkörper 2 in der in den Figuren 11A und 11B dargestellten Ausführungsvariante mehrere vorstehende Verbindungszapfen 23a und 23b aus. Diese Verbindungszapfen 23a und 23b greifen in Verbindungsöffnungen ein, die an einem Sockelbereich des Lagerabschnitts 30 ausgebildet sind, wenn der Mitnehmer 1 bestimmungsgemäß zusammengebaut ist. Der Mitnehmerkörper 2 und der das zu verschwenkende Klemmteil 3a und den Lagerabschnitt 30 aufweisende Teil des Mitnehmers 1 können somit separat hergestellt und anschließend zusammengefügt werden, um den Mitnehmer 1 herzustellen. Die Verbindung der beiden Teile des Mitnehmers 1, die jeweils ein Klemmteil 3a und 3b umfassen, ist hierbei über formschlüssige ineinandergreifende Verbindungselemente, wie die Verbindungszapfen 23a und 23b, erreicht. Alternativ oder ergänzend kann auch eine stoffschlüssige Verbindung der separat hergestellten Teile vorgesehen sein.

Ein Fensterheber kann grundsätzlich mindestens einen der dargestellten Mitnehmer 1 umfassen. In einer Ausführungsvariante eines zweisträngigen Fensterhebers, bei dem zwei Mitnehmer 1 an zwei zueinander quer beabstandeten Führungsschienen verschieblich gehalten sind, können dabei auch unterschiedlich ausgestaltete Mitnehmer 1 vorgesehen sein. So kann insbesondere in einem solchen zweisträngigen Fensterheber ein Mitnehmer 1 gemäß den Figuren 1 bis 8 oder 9A bis 9B, der einen an einen Mitnehmerkörper 2 fixiertem Scheibenhalter 3 aufweist, an einer ersten Führungsschiene angeordnet sein, während ein Mitnehmer 1 gemäß einer der Ausführungsvarianten der Figuren 10A bis 10B oder 11A bis 11B, bei dem mindestens ein Klemmteil 3a an dem Mitnehmerkörper 2 ausgeformt und dementsprechend integraler Bestandteil des Mitnehmerkörpers 2 ist, an der anderen, zweiten Führungsschiene angeordnet ist. An einem solchen zweisträngigen Fensterheber können somit unterschiedliche Ausführungsvarianten eines vorgeschlagenen Mitnehmers miteinander kombiniert sein.

### Bezugszeichenliste

- 1: Mitnehmer
- 2: Mitnehmerkörper
- 20: Führungsabschnitt
- 21: Verbindungsabschnitt
- 22: Anschlag
- 23: Halterabschnitt
- 23a, 23b: Verbindungszapfen
- 3: Scheibenhalter
- 3a, 3b: Klemmteil
- 30: Lagerabschnitt
- 300: Lagerbügel
- 3000: Aussparung
- 301: Schwenkzapfen (Schwenkelement)
- 32: Verbindungsabschnitt
- 35a, 35b: Schrauböffnung (Befestigungsöffnung)
- 4: Schraubrad
- 5: Schraube (Befestigungselement)
- E: Einführrichtung
- F: Fensterscheibe
- g: Spalt
- R: Schwenkrichtung
- S: Schwenkachse
- U: Scheibenunterkante

## Patentansprüche

1. Mitnehmer für einen Fahrzeugfensterheber, mit einem Scheibenhalter (3), der zwei einander gegenüberliegende Klemmteile (3a, 3b) umfasst, zwischen denen ein Spalt (g) für die Aufnahme eines Abschnitts einer Fensterscheibe (F) vorgesehen ist und die bei in den Spalt (g) eingeführter Fensterscheibe (F) über mindestens ein Befestigungselement (5) miteinander zu verbinden sind,
wobei der Scheibenhalter (3) einen Lagerabschnitt (30) für eines der Klemmteile (3a, 3b) ausbildet, an dem eine Schwenkachse (S) für das eine Klemmteil (3a) definiert ist, und ein in den Spalt (g) ragendes Schwenkelement (301) vorgesehen ist,
**dadurch gekennzeichnet, dass**
das Schwenkelement (301) an dem Lagerabschnitt (30) ausgeformt ist, und dass das eine Klemmteil (3a) mittels des Schwenkelements (301), unter elastischer und/oder plastischer Deformation des Lagerabschnitts (30), durch Einführen der Fensterscheibe (F) in den Spalt (g) um die Schwenkachse (S) in Richtung des anderen Klemmteils (3b) schwenkbar ist.

2. Mitnehmer nach Anspruch 1, **dadurch gekennzeichnet, dass** sich das Schwenkelement (301) bezogen auf eine Einführrichtung (E), entlang der die Fensterscheibe (F) bestimmungsgemäß in den Spalt (g) einführbar ist, unterhalb der Schwenkachse (S) befindet.

3. Mitnehmer nach Anspruch 1 oder 2, **dadurch gekennzeichnet, dass** der Lagerabschnitt (30) mit einem eine Aussparung (3000) definierenden Lagerbügel (300) ausgebildet ist und das Schwenkelement (301) in der Aussparung (3000) angeordnet ist.

4. Mitnehmerbaugruppe nach einem der vorhergehenden Ansprüche, **dadurch gekennzeichnet, dass** an beiden Klemmteilen (3a, 3b) eine Befestigungsöffnung (35a, 35b) für das Befestigungselement (5) vorgesehen ist.

5. Mitnehmerbaugruppe nach einem der vorhergehenden Ansprüche, **dadurch gekennzeichnet, dass** das Befestigungselement eine Schraube (5) umfasst.

6. Mitnehmer nach einem der vorhergehenden Ansprüche, **dadurch gekennzeichnet, dass** der Mitnehmer (1) einen Mitnehmerkörper (2) umfasst, an dem zumindest ein Teil des Scheibenhalters (3) festgelegt ist und der einen Führungsabschnitt (20) für die verschiebliche Führung des Mitnehmers (1) an einer Führungsschiene des Fahrzeugfensterhebers aufweist.

7. Fahrzeugfensterheber für die Verstellung einer Fensterscheibe, mit einem Mitnehmer (1) nach einem der Ansprüche 1 bis 6.

8. Verfahren zur Montage einer Fensterscheibe (F) an einen Mitnehmer (1) für einen Fahrzeugfensterheber, wobei zur bestimmungsgemäßen Montage der Fensterscheibe (F) an den Mitnehmer (1) ein Abschnitt der Fensterscheibe (F) in einen Spalt (g) eingeführt wird, der zwischen zwei Klemmteilen (3a, 3b) eines Scheibenhalters (3) des Mitnehmers (1) gebildet ist, und anschließend die zwei Klemmteile (3a, 3b) über mindestens ein Befestigungselement (5) miteinander verbunden werden, um den zwischen den Klemmteilen (3a, 3b) aufgenommenen Abschnitt der Fensterscheibe (F) an dem Mitnehmer (1) zu fixieren,
wobei an einem Lagerabschnitt (30) des Scheibenhalters (3) für eines der Klemmteile (3a, 3b) eine Schwenkachse (S) definiert ist und ein in den Spalt (g) ragendes Schwenkelement (301) vorgesehen ist, **dadurch gekennzeichnet, dass** das Schwenkelement (301) an dem Lagerabschnitt (30) ausgeformt ist, und durch Einführen der Fensterscheibe (F) in den Spalt (g) das eine Klemmteil (3a), unter elastischer und/oder plastischer Deformation des Lagerabschnitts (30), in Richtung des anderen Klemmteils (3b) um die Schwenkachse (S) geschwenkt wird.

9. Verfahren nach Anspruch 8, **dadurch gekennzeichnet, dass** der in den Spalt (g) eingeführte Abschnitt der Fensterscheibe (F) auf das in den Spalt (g) ragende Schwenkelement (301) des Lagerabschnitts (30) einwirkt und hierdurch das eine Klemmteil (3a) in Richtung des anderen Klemmteils (3b) geschwenkt wird.

10. Verfahren nach Anspruch 8 oder 9, **dadurch gekennzeichnet, dass** ein Mitnehmer (1) nach einem der Ansprüche 1 bis 6 verwendet wird.

## Claims

1. A carrier for a vehicle window lifter, comprising a pane holder (3) that comprises two opposed clamping parts (3a, 3b) between which a gap (g) is provided for receiving a portion of a window pane (F) and which are to be connected to each other via at least one fastening element (5) when the window pane (F) is inserted into the gap (g), wherein the pane holder (3) forms a bearing portion (30) for one of the clamping parts (3a, 3b), on which a swivel axis (S) is defined for the one clamping part (3a), and a swivel element (301) protruding into the gap (g) is provided,
**characterized in that**
the swivel element (301) is molded to the bearing portion (30) and that the one clamping part (3a) is pivotable by means of the swivel element (301) about the swivel axis (S) in the direction of the other clamping part (3b), by elastic and/or plastic deformation of the bearing portion (30), by inserting the window pane (F) into the gap (g).

2. The carrier according to claim 1, **characterized in that** based on an insertion direction (E) along which the window pane (F) is properly insertable into the gap (g), the swivel element (301) is disposed below the swivel axis (S).

3. The carrier according to claim 1 or 2, **characterized in that** the bearing portion (30) is formed with a bearing bracket (300) defining a cutout (3000) and the swivel element (301) is arranged in the cutout (3000).

4. The carrier assembly according to any of the preceding claims, **characterized in that** on both clamping parts (3a, 3b) a fastening opening (35a, 35b) is provided for the fastening element (5).

5. The carrier assembly according to any of the preceding claims, **characterized in that** the fastening element comprises a screw (5).

6. The carrier according to any of the preceding claims, **characterized in that** the carrier (1) comprises a carrier body (2) to which at least a part of the pane holder (3) is fixed and which includes a guide portion (20) for shiftably guiding the carrier (1) on a guide rail of the vehicle window lifter.

7. A vehicle window lifter for the adjustment of a window pane, comprising a carrier (1) according to any of claims 1 to 6.

8. A method for the assembly of a window pane (F) on a carrier (1) for a vehicle window lifter, wherein for the proper assembly of the window pane (F) to the carrier (1) a portion of the window pane (F) is inserted into a gap (g) that is formed between two clamping parts (3a, 3b) of a pane holder (3) of the carrier (1), and subsequently the two clamping parts (3a, 3b) are connected to each other via at least one fastening element (5) in order to fix the portion of the window pane (F) received between the clamping parts (3a, 3b) to the carrier (1), wherein on a bearing portion (30) of the pane holder (3) a swivel axis (S) is defined for one of the clamping parts (3a, 3b) and a swivel element (301) protruding into the gap (g) is provided,
**characterized in that**
the swivel element (301) is molded to the bearing portion (30) and by inserting the window pane (F) into the gap (g) the one clamping part (3a) is pivoted, by elastic and/or plastic deformation of the bearing portion (30), in the direction of the other clamping part (3b) about the swivel axis (S).

9. The method according to claim 8, **characterized in that** the portion of the window pane (F) inserted into the gap (g) acts on the swivel element (301) of the bearing portion (30) protruding into the gap (g), and the one clamping part (3a) thereby is pivoted in the direction of the other clamping part (3b).

10. The method according to claim 8 or 9, **characterized in that** a carrier (1) according to any of claims 1 to 6 is used.

## Revendications

1. Entraîneur pour un lève-vitre de véhicule, avec un système de maintien de vitre (3), qui comprend deux parties de serrage (3a, 3b) se faisant face l'une l'autre, entre lesquelles une fente (g) est prévue pour le logement d'une section d'une vitre de fenêtre (F) et qui sont à relier l'une à l'autre par l'intermédiaire d'au moins un élément de fixation (5) lorsque la vitre de fenêtre (F) est introduite dans la fente (g),
dans lequel
le système de maintien de vitre (3) réalise une section de montage (30) pour une des parties de serrage (3a, 3b), sur laquelle un axe de pivotement (S) est défini pour la partie de serrage (3a), et un élément de pivotement (301) dépassant dans la fente (g) est prévu,
**caractérisé en ce que**
l'élément de pivotement (301) est formé sur la section de montage (30), et que la partie de serrage (3a) peut être pivotée autour de l'axe de pivotement (S) en direction de l'autre partie de serrage (3b) par l'introduction de la vitre de fenêtre (F) dans la fente (g) au moyen de l'élément de pivotement (301), tout en déformant élastiquement et/ou plastiquement la section de montage (30).

2. Entraîneur selon la revendication 1, **caractérisé en ce que** l'élément de pivotement (301) se trouve, par rapport à une direction d'introduction (E), le long de laquelle la vitre de fenêtre (F) peut être introduite dans la fente (g) conformément à l'usage prévu, sous l'axe de pivotement (S).

3. Entraîneur selon la revendication 1 ou 2, **caractérisé en ce que** la section de montage (30) est réalisée avec un étrier de montage (300) définissant un évidement (3000) et l'élément de pivotement (301) est disposé dans l'évidement (3000).

4. Module entraîneur selon l'une quelconque des revendications précédentes, **caractérisé en ce qu'**une ouverture de fixation (35a, 35b) est prévue pour l'élément de fixation (5) sur les deux parties de serrage (3a, 3b).

5. Module entraîneur selon l'une quelconque des revendications précédentes, **caractérisé en ce que** l'élément de fixation comprend une vis (5).

6. Entraîneur selon l'une quelconque des revendications précédentes, **caractérisé en ce que** l'entraîneur (1) comprend un corps d'entraîneur (2), sur lequel au moins une partie du système de maintien de vitre (3) est fixée et qui présente une section de guidage (20) pour le guidage par coulissement de l'entraîneur (1) sur un rail de guidage du lève-vitre de véhicule.

7. Lève-vitre de véhicule pour l'ajustement d'une vitre de fenêtre, avec un entraîneur (1) selon l'une quelconque des revendications 1 à 6.

8. Procédé de montage d'une vitre de fenêtre (F) sur un entraîneur (1) pour un lève-vitre de véhicule, dans lequel une section de la vitre de fenêtre (F) est introduite, pour le montage conformément à l'usage prévu de la vitre de fenêtre (F) sur l'entraîneur (1), dans une fente (g), laquelle est formé entre deux parties de serrage (3a, 3b) d'un système de maintien de vitre (3) de l'entraîneur (1), puis les deux parties de serrage (3a, 3b) sont reliées l'une à l'autre par l'intermédiaire d'au moins un élément de fixation (5) pour bloquer sur l'entraîneur (1) la section, logée entre les parties de serrage (3a, 3b), de la vitre de fenêtre (F),
dans lequel
un axe de pivotement (S) est défini sur une section de montage (30) du système de maintien de vitre (3) pour une des parties de serrage (3a, 3b), et un élément de pivotement (301) dépassant dans la fente (g) est prévu, **caractérisé en ce que** l'élément de pivotement (301) est formé sur la section de montage (30), et la partie de serrage (3a) est pivotée autour de l'axe de pivotement (S) en direction de l'autre pièce de serrage (3b), tout en déformant élastiquement et/ou plastiquement la section de montage (30), par l'introduction de la vitre de fenêtre (F) dans la fente (g).

9. Procédé selon la revendication 8, **caractérisé en ce que** la section, introduite dans la fente (g), de la vitre de fenêtre (F) agit sur l'élément de pivotement (301), dépassant dans la fente (g), de la section de montage (30) et ce faisant la pièce de serrage (3a) est pivotée en direction de l'autre pièce de serrage (3b).

10. Procédé selon la revendication 8 ou 9, **caractérisé en ce qu'**un entraîneur (1) selon l'une quelconque des revendications 1 à 6 est entraîné.
